# EUROPEAN PATENT SPECIFICATION

(11) **EP 1 478 691 B1**
(45) Date of publication and mention of the grant of the patent: **12.10.2005**
(21) Application number: 03743082.4
(22) Date of filing: 21.02.2003
(51) Int. Cl.: C08K 5/3435, C08K 5/13

(54) **STABILIZED POLYPROPYLENE RESIN COMPOSITION**
STABILISIERTE POLYPROPYLENHARZZUSAMMENSETZUNG
COMPOSITION STABILISEE DE RESINE DE POLYPROPYLENE

(30) Priority: 27.02.2002 EP 02075778
(43) Date of publication of application: 24.11.2004
(73) Proprietor: SABIC Polypropylenes B.V., 6135 KR Sittard (NL)
(72) Inventor: GIJSMAN, Pieter, NL-6191 NM Beek (NL); SAMPERS, Jacobus, NL-6077 AH Sint Odilienberg (NL); BUNGE, Wytske, NL-6212 XW Maastricht (NL); VAASSEN, Johannes, Michiel, NL-6171 JE Stein (NL)
(74) Representative: Jacobs, Monique S.N.
(86) International application number: PCT/NL2003/000141
(87) International publication number: WO 2003/072648

(56) References cited:
- EP-A- 0 411 628
- EP-A- 0 501 239
- US-A- 4 975 489
- US-A- 5 124 456

## Description

The present invention relates to a polypropylene resin composition which is stabilized against photo-induced oxidation.

Such a resin composition is described in a publication from N.S. Allen et al.: "Interactions of antioxidants with hindered piperidine compounds in the thermal and photochemical oxidation of polypropylene films", Plastics and rubber processing and applications, vol 5(3), 259-65, 1985. Generally, hindered antioxidants are used.

The hindered piperidine compounds used are also called hindered amine-based light stabilizers (HALS); they are well known UV-stabilizers. The hindered anti-oxidants are phenolic antioxidants (PAO); they are normally known as long term heat and processing stabilizers. In the rest of the present text the above abbreviations are used.

In such a composition it depends on the type of PAO as well as the type of HALS whether such a combination results in a synergistic or antagonistic effect, as also described in the above referenced article; there seems to be no scientific explanation underlying said effects.

The uncertainty regarding possible synergistic effects of a combination of a PAO and an HALS compound is even more pregnant in the case where the polypropylene resin contains pigments resulting in a coloured composition.

Here and hereinafter a coloured (or pigmented) polypropylene resin composition means a polypropylene composition in which pigments have been used, resulting in that plaques, made from this composition, have an L-value of less than 80 (as determined according to DIN 5033 (CIE LAB, D65, 10°, 45/0). Such a composition is different from the composition as described in the publications referenced above, as in the latter the composition is used in the preparation of transparent films.

The aim of the present invention is to provide a pigmented polypropylene resin composition, stabilized against thermal and photochemical oxidation.

This aim is realized in a polypropylene resin composition, comprising a hindered amine-based light stabilizer (HALS), a phenolic antioxidant (PAO) and a pigment, in which:
a) both the HALS and the PAO are low-molecular weight components, the molecular weight of the HALS being equal to or below 1250, the molecular weight of the PAO being equal to or below 750;
b) the HALS and the PAO each are present in an amount between 0.025 and 1.0 wt.%;
c) the weight ratio of HALS to PAO is less than 5;
d) the L-value of plaques, prepared from the composition, and determined according to DIN 5033 (CIE LAB, D65, 10°, 45/0), is less than 80.

It has appeared, and will also be evident from the Examples and comparative experiments, given in this specification, that the composition of the invention has a remarkable photo-stability. This is especially in the case that the composition is used to form shaped articles having a wall thickness of at least 250 µm.

HALS and PAO compounds to be used in the present invention are, as such, known in the art. They both have to be of a low molecular weight, which is contrary to the trend of recent years in which HALS and PAO compounds are developed based on ever larger molecules, in order to increase the lifetime of articles made of such polymer compositions.

The hindered amine-based light stabilizers, to be used in the polypropylene resin composition of the present invention, have a molecular weight of at most 1250 and are piperidine or piperazinone based. Non-exhaustive examples of such compounds are (with commercial examples thereof):
2,2,6,6-tetramethyl-4-piperidon;
2,2,6,6-tetramethyl-4-piperidinol;
bis-(1,2,2,6,6-pentamethylpiperidyl)-(3',5'-di-tert-butyl-4'-hydroxybenzyl)-butylmalonate;
bis-(2,2,6,6-tetramethyl-4-piperidinyl)-decanedioate (Tinuvin® 770);
bis-(2,2,6,6-tetramethyl-4-piperidinyl)-succinate (Tinuvin® 780) ;
bis-(1-octyloxy-2,2,6,6-tetramethyl-4-piperidinyl)-sebacate (Tinuvin® 123);
bis-(1,2,2,6,6-pentamethyl-4-piperidinyl)-sebacate (Tinuvin® 765) ;
tetrakis-(2,2,6,6-tetramethyl-4-piperidyl)-1,2,3,4-butane-tetracarboxylaat ;
N,N'-bis-(2,2,6,6-tetramethyl-4-piperidyl)-hexane-1,6-diamine;
N-butyl-2,2,6,6-tetramethyl-4-piperidinamine;
5-(2,2,6,6-tetramethyl-4-piperidinyl)-2-cyclo-undecyl-oxazole) (Hostavin® N20);
1,1'-(1,2-ethane-di-yl)-bis-(3,3',5,5'-tetramethyl- piperazinone) (Goodrite® UV3034);
8-acetyl-3-dodecyl-7,7,9,9-tetramethyl-1,3,8-triazaspiro(4,5)decaan-2,4-dione (Tinuvin® 440);
1,2,3,4-butane-tetracarboxylic acid-1,2,3-tris(1,2,2,6,6-pentamethyl-4-piperidinyl)-4-tridecylester (Mark® LA62);
N-2,2,6,6-tetrametyl-4-piperidinyl-N-amino-oxamide (Luchem® HAR100); 4-acryloyloxy-1,2,2,6,6-pentamethyl-4-piperidine;
Mixture of esters from 2,2,6,6-tetramethyl-4-piperidinol and fatty acids (Cyasorb® UV3853);
Propanedioic acid, [(4-methoxyphenyl)methylene]-,bis(1,2,2,6,6-pentamethyl-4-piperidinyl) ester (Sanduvor® PR 31);
Formamide, N,N'-1,6-hexanediylbis[N-(2,2,6,6-tetramethyl-4-piperidinyl (Uvinul® 4050H);
1,5-Dioxaspiro (5,5) undecane 3,3-dicarboxylic acid, bis (2,2,6,6-tetramethyl-4-peridinyl) ester (Cyasorb® UV-500);
1,5-Dioxaspiro (5,5) undecane 3,3-dicarboxylic acid, bis (1,2,2,6,6-pentamethyl-4-peridinyl) ester (Cyasorb® UV516);
3-dodecyl-1-(2,2,6,6-tetramethyl-4-piperidyl)-pyrrolidin-2,5-dione (Cyasorb® UV3581)
3-dodecyl-1-(1,2,2,6,6-pentamethyl-4-piperidyl)-pyrrolidin-2,5-dione.

The phenolic antioxidants, to be used in the polypropylene resin composition of the present invention, have a molecular weight of at most 750. They can either be monophenolic, bisphenolic or even polyphenolic. Non-exhaustive examples of such compounds are (with commercial examples thereof):
2,6-di-t-butyl-4-methylphenol ;
2,6-di-t-butyl-4-ethylphenol;
Octadecyl 3,5-di-t-butyl-4-hydroxyhydrocinnamate (Irganox® 1076) ;
Benzenepropanoic acid, 3,5-bis(1,1-dimethylethyl)-4-hydroxy-methyl ester (Ralox 35);
Benzenepropanoic acid, 3,5-bis(1,1-dimethylethyl)-4-hydroxy-isooctyl ester (Irganox® 1135) ;
Benzenepropanoic acid, 3,5-bis(1,1-dimethylethyl)-4-hydroxy-C₁₃₋₁₅ branched and lineair alkyl esters (Anox® BF);
Benzenepropanoic acid, 3,5-bis(1,1-dimethylethyl)-4-hydroxy;
2,2'-methylenebis (6-t-butyl-4-methylphenol) (Cyanox® 2246);
2,2'-Methylenebis 6-(1-methylcyclohexyl)-p-cresol (Lowinox® WSP);
4,4'-Butylidenebis (6-t-butyl-3-methyl-phenol) (Santhowhite® powder);
1,1,3-Tris (2-methyl-4-hydroxy-5-t-butyl phenyl) butane (Topanol® CA);
N,N'-Hexamethylene bis (3,5-di-t-butyl-4-hydroxyhydrocinnamamide (Irganox® 1098);
2,2'-Ethylidenebis (4,6-di-t-butylphenol) (Isonox® 129);
4,4'-Methylenebis (2,6-di-t-butylphenol) (Ethanox 702);
tri-ethylene-glycol-bis-3-(t-butyl-4-hydroxy-5-methyl-phenyl)-propionate (Irganox® 245);
1,6-hexane-diol-bis-3-(3,5-di-t-butyl-4-hydroxyphenyl)-propionate (Irganox® 259);
Butylated hydroxyanisole (Teenox® BHA);
2,6-di-t-butyl-4-sec-butyl-phenol (Isonox® 132);
2,6-di-t-butyl-4-n-butyl-phenol;
2,6-di-t-butyl-4-nonyl-phenol (Isonox® 232);
2,6-di-methyl-6-(1-methyl-cyclohexyl)-phenol (Lowinox® WSL);
2,4-di-methyl-6-(1-methyl-6-(1-methylpentadecyl)-2-propyleneacid, 2-isopentane6[(3-isopentane-2-hydroxy-5-isopentane-phenyl)-ethyl]-4- methyl-phenyl-ester(Sumilizer® GS);
2-propylene-acid,2-t-butyl-6-[(3-t-butyl-2-hydroxy-5-methyl-phenyl)-methyl]-4-methyl-phenyl-ester (Sumilizer® GM);
di-ethyl-ester of 3,5-di-t-butyl-4-hydroxy-benzyl-phosphoric acid (Irganox® 1222);
2,5,7,8-tetra-methyl-2-(4',8',12'-tri-methyl-tri-decyl)-6-chromanol (Ronotec® 201);
N,N'-1,3-Propanediylbis(3,5-di-t-butyl-4-hydroxyhydrocinnamamide);
Calcium bis[monoethyl(3,5-di-t-butyl-4-hydroxybenzyl)phosphonate (Irganox® 1425).

In the polypropylene resin composition both the HALS as well as the PAO compound are present in an amount between 0.025 and 1.0 wt.%; the weight ratio between the HALS and the PAO compound being less than 5, preferably less than 3 and even more preferred less than 1.

As HALS compound, a preference is given to a HALS compound, having as chemical name:
Bis (2,2,6,6-tetramethyl-4-piperidinyl) decanedioate, commercially known under e.g. Tinuvin® 770 and Sumisorb® 577.

As PAO compound, a preference is given to a PAO compound, having as chemical name:
Octadecyl 3,5-di-t-butyl-4-hydroxyhydrocinnamate; commercially known under e.g. Irganox® 1076 and Ultranox® 276.

The polypropylene resin composition of the present invention also comprises one or more pigments, in order to obtain a coloured product. This means that, according to DIN 5033 (CIE LAB, D65, 10°, 45/0), the L-value of such a product is less than 80. More preferred, this L-value is less than 50 even; more preferred, the L-value is equal to or less than 30. The man skilled in the art is aware of the potential selections he can make for the pigments to be used in his specific composition, based on the above restriction regarding the L-value. Generally the pigment is present in an amount equal to or above 0.05 wt.%; generally not more than 5 wt.% is necessary to obtain the desired colouring effect.

It has been found that a sulphur (S) containing PAO shows a somewhat antagonistic effect in the referenced polypropylene resin compositions; therefor, PAO's in which S is absent are preferred.

The polypropylene polymer in the resin composition comprises a polymer based on propylene as the single or predominantly present monomer, or in other words: the polymer is either a homopolymer, a copolymer or a random polymer. Preferably the polypropylene resin in the composition of the present invention is a propylene/α-olefin copolymer. In general every α-olefin monomer having 2-12C-atoms is suited; the preference is for the α-olefin monomer to be selected from the group comprising ethylene, butylene and octene. The polyproylene homopolymer part in such a copolymer is preferably present in an amount equal to or less than 90 wt%, more preferred equal to or less than 85 wt%; most preferred equal to or less than 80 wt%.

The α-olefin content of such a co- or random polymer is generally above 4 wt%, more preferred above 8 wt%, most preferred above 12 wt%.

The polypropylene polymer can be a polymer made by any known polymerization technique as well as with any known polymerization catalyst system. Regarding the techniques, reference can be given to slurry, solution or gasphase polymerizations; regarding the catalyst system reference can be given to Ziegler-Natta, metallocene, or (other) single-site catalyst systems. All are, in themselves, known in the art.

Preferably, the polypropylene polymer has a melt flow index (MFI), measured according to ISO 1133 at 230 °C and 2.16 kg, of between 0.1 and 100, more preferred between 1 and 50.

The polypropylene resin composition of the present invention may also comprise known additional polymeric or inorganic additives and fillers. Examples hereof are: of fibers (natural or polymeric); fillers (like clay or talcum), lubricants, UV-absorbers, flame retarding agents, additional rubber(s), etc. The man skilled in the art is aware of (mixtures of) these ingredients.

The polypropylene resin composition according to the invention may be transformed into shaped (semi-)finished articles using a variety of processing techniques. Examples of suitable processing techniques include injection moulding, injection compression moulding, in-mould decorating via injection moulding, extrusion, and extrusion compression moulding. Injection moulding is widely used to produce articles such as for example automotive exterior parts like bumpers, automotive interior parts like instrument panels, or automotive parts under the bonnet. Extrusion is widely used to produce articles such as rods, sheets and pipes.

Processes for preparing the polypropylene resin composition of the present invention can be any process known in the art to compound liquid or solid ingredients into a polymer. Examples hereof are: extruder mixing, mixing in a Banbury type equipment, solution blending etc.

As indicated above, especially (the preparation of) shaped articles having a wall thickness of at least 250 µm benefits from a polypropylene resin composition of the present invention. Preferably the wall thickness of such shaped articles is at least 500 µm, more preferred at least 800 µm and most preferred at least 1200 µm. The upper limit of the wall thickness is determined by what is practically possible with using known techniques to produce the articles.

The invention will be further illustrated by means of the following, non restrictive, Examples and comparative experiments.

### Example I, comparative experiments A, B

A high impact propylene/ethylene copolymer with 14 wt.% ethylene and a rubber content of 24 wt% was compounded and granulated on a single screw extruder at 240°C with 0.1 wt.% calcium stearate, 0.1 wt.% Ultranox® 626, 0.45 wt.% Tinuvin® 770 and 0.1 wt.% of a phenolic antioxidant (see Table 1). The resulting granulates were mixed with 2 wt.% of a dark grey colour masterbatch and injection molded at 260°C to plaques measuring 3.2 X 65 X 65 mm (colour of these plaques: a=0.2, b=-1, L= 13).
These plaques were subjected to accelerated ageing in a Weather-Ometer according to ASTM-G26 with the following settings:

| | |
|---|---|
| Black panel temperature (°C) | 63 |
| Intensity at 340 nm (W/m²/nm) | 0.35 |
| Rain cycle (dry/wet) (min/min) | 102/18 |
| Relative humidity in the dry period (%) | 55 |

The ageing was measured by monitoring the degree of discolouration of the plaques by applying the grey scale assessment in accordance with DIN 54001. The ageing was stopped at a grey scale of 4.

**Table 1**

| Example / experiment | Phenolic antioxidant | Time to grey scale 4 (h) |
|---|---|---|
| I | Irganox® 1076 | 3000 |
| A | Irganox® 3114 | 1500 |
| B | Irganox® 1010 | 700 |

### Example II, comparative experiment C

A high impact propylene/ethylene copolymer with 14 wt.% ethylene and a rubber content of 24 wt% was compounded and granulated on a single screw extruder at 240°C with 0.1 wt.% calcium-stearate, 0.04 wt.% Irganox® 1010, 0.4 wt.% Goodrite® 3034 and a phenolic antioxidant (see Table 2). The granulates were mixed with 1.6 wt.% of a grey colour masterbatch and injection-molded at 260°C to plaques measuring 3.2 X 65 X 65 mm (colour of these plaques: a=0.2, b=-1, L= 13).
These plaques were subjected to accelerated ageing in a Weather-Ometer according to ASTM-G26 with the following settings:

| | |
|---|---|
| Black panel temperature (°C) | 50 |
| Intensity at 340 nm (W/m²/nm) | 0.28 |
| Rain cycle (dry/wet) (min/min) | 102/18 |
| Relative humidity in the dry period (%) | 50 |

The ageing was measured by monitoring the degree of discolouration of the plaques by applying the grey scale assessment in accordance with DIN 54001. The ageing was stopped at a grey scale of 3.

**Table 2**

| Example / experiment | Phenolic antioxidant | Time to grey scale 3 (h) |
|---|---|---|
| II | 0.1 wt.% BHT | 7500 |
| C | 0.1 wt.% Irganox® B215 | 3500 |

### Examples III-IX, comparative experiment D

A high impact propylene-ethylene copolymer with 14 wt.% ethylene and a rubber content of 24 wt% was compounded and granulated on a ZSK-30 twinscrew extruder at 240°C with 0.05 wt.% calcium stearate, 0.15 wt.% Irganox® B215, Tinuvin® 770 and Irganox® 1076 (for amounts see Table 3). The resulting granulates were mixed with 2 wt.% of a grey colour masterbatch and injection molded at 260°C to textured plaques measuring 3.2 X 65 X 65 mm (colour of these plaques: a=0.1, b=-1.5, L= 13). These plaques were subjected to accelerated ageing in a Weather-Ometer according to ASTM-G26 with the following settings:

| | |
|---|---|
| Black panel temperature (°C) | 63 |
| Intensity at 340 nm (W/m²/nm) | 0.35 |
| Rain cycle (dry/wet) (min/min) | 102/18 |
| Relative humidity in the dry period(%) | 55 |

The ageing was measured by monitoring the degree of discolouration of the plaques by applying the grey scale assessment in accordance with DIN 54001. The ageing was stopped at a grey scale of 4.

**Table 3**

| Example / experiment | Irganox® 1076 (wt.%) | Tinuvin® 770 (wt.%) | Time to grey scale 4 (h) |
|---|---|---|---|
| III | 0.08 | 0.1 | 4600 |
| IV | 0.24 | 0.1 | 6600 |
| V | 0.24 | 0.25 | 6600 |
| VI | 0.24 | 0.4 | 6600 |
| VII | 0.4 | 0.1 | 6600 |
| VIII | 0.4 | 0.25 | 6200 |
| IX | 0.4 | 0.4 | 6600 |
| D | 0.08 | 0.4 | 4000 |

### Examples X-XII, comparative experiments E-I

A high impact propylene/ethylene copolymer with 14 wt.% ethylene and a rubber content of 24 wt% was compounded and granulated on a single-screw extruder at 240°C with 0.1 wt.% calcium stearate, 0.15 wt.% Irganox® B215, a HALS (Tinuvin® 770 or Chimassorb® 944) and Irganox® 1076 (for type and amounts see Table 4). The resulting granulates were mixed with 2 wt.% of a grey colour masterbatch and injection molded at 260°C to plaques measuring 3.2 X 65 X 65 mm (colour of these plaques: a=0.1, b=-1, L= 15).
These plaques were subjected to accelerated ageing in a Weather-Ometer according to ASTM-G26 with the following settings:

| | |
|---|---|
| Black panel temperature (°C) | 63 |
| Intensity at 340 nm (W/m²/nm) | 0.35 |
| Rain cycle (dry/wet) (min/min) | 102/18 |
| Relative humidity in the dry period (%) | 50 |

The ageing was measured by monitoring the degree of discolouration of the plaques by applying the grey scale assessment in accordance with DIN 54001. The ageing was stopped at a grey scale of 4.

**Table 4**

| Example / experiment | Irganox® 1076 (wt.%) | HALS (wt.%) | Time to grey scale 4 (h) |
|---|---|---|---|
| X | 0.05 | 0.20 Tinuvin® 770 | 2500 |
| XI | 0.075 | 0.05 Tinuvin® 770 | 2750 |
| XII | 0.075 | 0.20 Tinuvin® 770 | 4250 |
| E | | 0.20 Tinuvin® 770 | 1300 |
| F | 0.05 | | 2000 |
| G | | 0.20 Chimassorb® 944 | 1300 |
| H | 0.05 | 0.20 Chimassorb® 944 | 2000 |
| I | 0.025 | 0.20 Tinuvin® 770 | 1750 |

### Examples XIII-XIV, comparative experiments J-K

A high impact propylene/ethylene copolymer with 17 wt.% ethylene and a rubber content of 32 wt% was compounded and granulated on a single-screw extruder at 240°C with 0.05 wt.% calcium stearate, 0.15 wt.% Irganox® B225, Tinuvin® 770 and Irganox® 1076 (for amounts see Table 5). The resulting granulates were mixed with 2 wt.% of two different dark grey colour masterbatches (for colour code and coordinates of the plaques: see Table 5) and injection molded at 260°C to textured plaques measuring 3.2 X 65 X 65 mm.
These plaques were subjected to accelerated ageing in a Weather-Ometer according to D27.1389 with the following settings:

| | |
|---|---|
| Black panel temperature (°C) | 70 |
| Intensity at 340 nm (W/m²/nm) | 0.55 |
| Rain cycle (dry/wet) (min/min) | 102/18 |
| Relative humidity in the dry period (%) | 50 |

The ageing was measured by monitoring the degree of discolouration of the plaques by applying the grey scale assessment in accordance with DIN 54001. The ageing was stopped at a grey scale of 4.

**Table 5**

| Example / experiments | Irganox® 1076 (wt.%) | Tinuvin® 770 (wt.%) | Colour code | a | b | L | Time to grey scale 4 (h) |
|---|---|---|---|---|---|---|---|
| J | 0.075 | 0.45 | FZL | 0.3 | -1.4 | 19 | 4500 |
| XIII | 0.15 | 0.15 | FZL | 0.3 | -1.4 | 19 | 5500 |
| K | 0.075 | 0.45 | FXX | 0.2 | -0.6 | 16 | 4500 |
| XIV | 0.15 | 0.15 | FXX | 0.2 | -0.6 | 16 | 6000 |

### Examples XV, comparative experiments L-N

A high impact propylene/ethylene copolymer with 15 wt.% ethylene and a rubber content of 24 wt% was compounded and granulated on a single-screw extruder at 240°C with 0.1 wt.% calcium-stearate, 0.075 wt.% Irgafos® 168 I, 0.2 wt.% Tinuvin® 770 and 0.15 wt.% Irganox® 1076 or Irganox® 1010. These granules were injection molded with and without 2 wt.% of a grey color masterbatch at 260°C to plaques measuring 3.2 X 65 X 65 mm. The colour of the pigmented plaques was: a = 0.2; b = 1; and L = 13. The colour of the unpigmented plaques was: a = -2; b = -6 and L = 60.
These plaques were subjected to accelerated ageing in a Weather-Ometer according to ASTM-G26 with the following settings:

| | |
|---|---|
| Black panel temperature (°C) | 63 |
| Intensity at 340 nm (W/m²/nm) | 0.35 |
| Rain cycle (dry/wet) (min/min) | 102/18 |
| Relative humidity in the dry period (%) | 50 |

The ageing was measured by monitoring the degree of discolouration of the plaques by applying the grey scale assessment in accordance with DIN 54001. The ageing was stopped at a grey scale of 3.

| Example / experiment | Phenolic antioxidant (wt.%) | Grey colour MB (wt.%) | Time to grey scale 3 (h) |
|---|---|---|---|
| XV | 0.15 Irganox® 1076 | 2 | 6000 |
| L | 0.15 Irganox® 1076 | - | 4500 |
| M | 0.15 Irganox® 1010 | 2 | 4500 |
| N | 0.15 Irganox® 1010 | - | 4500 |

## Claims

1. Polypropylene resin composition, comprising a hindered amine-based light stabilizer ( HALS), a phenolic antioxidant ( PAO) and a pigment, in which:
a) both the HALS and the PAO are low-molecular weight components, the molecular weight of the HALS being equal to or below 1250, the molecular weight of the PAO being equal to or below 750;
b) the HALS and the PAO each are present in an amount between 0.025 and 1.0 wt%;
c) the weight ratio of HALS to PAO is less than 5;
d) the L-value of plaques, prepared from the composition, and determined according to DIN 5033 (CIE LAB, D65, 10°, 45/0), is less then 80.

2. Polypropylene resin composition according to claim 1, wherein the weight ratio of HALS to PAO is equal to or less than 3.

3. Polypropylene resin composition according to claim 2, wherein the weight ratio of HALS to PAO is equal to or less than 1.

4. Polypropylene resin composition according to anyone of claims 1-3, wherein in the PAO sulphur (S) is absent.

5. Polypropylene resin composition according to anyone of claims 1-4, wherein the polypropylene resin is a propylene/ α-olefin copolymer.

6. Polypropylene resin composition according to claim 5, wherein the α-olefin in the copolymer is selected from the group comprising ethylene, butylene, and octene.

7. Polypropylene resin composition according to claim 6, wherein the α-olefin is ethylene.

8. Polypropylene resin composition according to anyone of claims 5-7, wherein the polypropylene resin comprises a polypropylene homopolymer in an amount equal to or less then 90 wt%.

9. Article at least partially made of a polypropylene resin composition according to anyone of claims 1-8.

10. Article according to claim 9, wherein the article has a wall thickness of at least 250 µm.

## Patentansprüche

1. Polypropylenharzzusammensetzung, welche einen auf gehindertes Amin basierten Lichtstabilisator (HALS), ein phenolisches Antioxidans (PAO) und ein Pigment umfasst, worin:
a) sowohl der HALS, als auch das PAO Komponenten mit niedrigem Molekulargewicht sind, wobei das Molekulargewicht des HALS gleich oder unter 1250 ist, das Molekulargewicht des PAO gleich oder unter 750 ist;
b) der HALS und das PAO jeweils in einer Menge zwischen 0,025 und 1,0 Gew.-% vorhanden sind;
c) das Gewichtverhältnis von HALS zu PAO geringer als 5 ist;
d) der L-Wert von Plaques, hergestellt aus der Zusammensetzung und bestimmt gemäß DIN 5033 (CIE LAB, D65, 10°, 45/0) geringer als 80 ist.

2. Polypropylenharzzusammensetzung gemäß Anspruch 1, worin das Gewichtverhältnis von HALS zu PAO gleich oder geringer als 3 ist.

3. Polypropylenharzzusammensetzung gemäß Anspruch 2, worin das Gewichtverhältnis von HALS zu PAO gleich oder geringer als 1 ist.

4. Polypropylenharzzusammensetzung gemäß einem der Ansprüche 1-3, worin im PAO Schwefel (S) abwesend ist.

5. Polypropylenharzzusammensetzung gemäß einem der Ansprüche 1-4, worin das Polypropylenharz ein Propylen/ α-Olefin-Copolymer ist.

6. Polypropylenharzzusammensetzung gemäß Anspruch 5, worin das α-Olefin in dem Copolymer ausgewählt wird aus der Gruppe umfassend Ethylen, Butylen und Octen.

7. Polypropylenharzzusammensetzung gemäß Anspruch 6, worin das α-Olefin Ethylen ist.

8. Polypropylenharzzusammensetzung gemäß einem der Ansprüche 5-7, worin das Polypropylenharz ein Polypropylen-Homopolymer in einer Menge gleich oder geringer als 90 Gew.-% umfasst.

9. Artikel, welcher mindestens teilweise aus einer Polypropylenharzzusammensetzung gemäß einem der Ansprüche 1-8 gemacht ist.

10. Artikel gemäß Anspruch 9, wobei der Artikel eine Wanddicke von mindestens 250 µm hat.

## Revendications

1. Composition de résine de polypropylène, comprenant un photostabilisant à base d'amine encombrée (HALS), un anti-oxydant phénolique (PAO) et un pigment, dans laquelle :
a) à la fois HALS et PAO sont des composants de faible masse moléculaire, la masse moléculaire de HALS étant égale ou inférieure à 1250, la masse moléculaire de PAO étant égale ou inférieure à 750 ;
b) HALS et PAO sont chacun présents en une quantité comprise entre 0,025 et 1,0 % en poids ;
c) le rapport en poids de HALS sur PAO est inférieur à 5 ;
d) la valeur de L de plaques, préparées à partir de la composition, et déterminée selon la norme DIN 5033 (CIE LAB, D65, 10°, 45/0), est inférieure à 80.

2. Composition de résine de polypropylène selon la revendication 1, dans laquelle le rapport en poids de HALS sur PAO est égal ou inférieur à 3.

3. Composition de résine de polypropylène selon la revendication 2, dans laquelle le rapport en poids de HALS sur PAO est égal ou inférieur à 1.

4. Composition de résine de polypropylène selon l'une quelconque des revendications 1 à 3, dans laquelle le soufre (S) est absent dans PAO.

5. Composition de résine de polypropylène selon l'une quelconque des revendications 1 à 4, dans laquelle la résine de polypropylène est un copolymère de propylène/α-oléfine.

6. Composition de résine de polypropylène selon la revendication 5, dans laquelle l'α-oléfine dans le copolymère est choisie dans le groupe comprenant l'éthylène, le butylène et l'octène.

7. Composition de résine de polypropylène selon la revendication 6, dans laquelle l'α-oléfine est l'éthylène.

8. Composition de résine de polypropylène selon l'une quelconque des revendications 5 à 7, dans laquelle la résine de polypropylène comprend un homo-polymère de polypropylène en une quantité égale ou inférieure à 90 % en poids.

9. Article fait au moins partiellement d'une composition de résine de polypropylène selon l'une quelconque des revendications 1 à 8.

10. Article selon la revendication 9, dans lequel l'article a une épaisseur de paroi d'au moins 250 µm.
